# EUROPEAN PATENT APPLICATION

(11) **EP 4 579 448 A1**
(43) Date of publication of application: **02.07.2025**
(21) Application number: 23884235.5
(22) Date of filing: 28.06.2023
(51) Int. Cl.: G06F 9/4401

(54) **WAKE-UP METHOD AND APPARATUS**

(30) Priority: 03.11.2022 CN 202211370332; 14.02.2023 CN 202310156937
(71) Applicant: Huawei Technologies Co., Ltd., Shenzhen, Guangdong 518129 (CN)
(72) Inventor: YU, Jialin, Shenzhen, Guangdong 518129 (CN); HUANG, Jing, Shenzhen, Guangdong 518129 (CN); YU, Zhiping, Shenzhen, Guangdong 518129 (CN); MI, Michael Bi, Shenzhen, Guangdong 518129 (CN)
(74) Representative: Körber, Martin Hans
(86) International application number: PCT/CN2023/103466
(87) International publication number: WO 2024/093296

(57) **Abstract**

A wakeup method and an apparatus are provided. The method includes: obtaining an image; using the image as input data of a level-1 wakeup network to obtain a first detection result output by the level-1 wakeup network, where the level-1 wakeup network is used to perform target object detection on the input image; waking up a level-2 wakeup network when the first detection result indicates that a target object exists in the image, where the level-2 wakeup network is used to perform target object detection on the image, and detection precision of the level-2 wakeup network is higher than detection precision of the level-1 wakeup network; detecting the image by using the level-2 wakeup network to obtain a second detection result output by the level-2 wakeup network; and when the second detection result indicates that the target object exists in the image, waking up a processing unit to perform a preset operation.

## Description

### CROSS-REFERENCE TO RELATED APPLICATIONS

This application claims priorities to Chinese Patent Application No. 202211370332.X, filed with the China National Intellectual Property Administration on November 03, 2022 and entitled "DATA PROCESSING METHOD AND APPARATUS", which is incorporated herein by reference in its entirety, and to Chinese Patent Application No. 202310156937.7, filed with the China National Intellectual Property Administration on February 14, 2023 and entitled "WAKEUP METHOD AND APPARATUS", both of which is incorporated herein by reference in its entirety.

### TECHNICAL FIELD

This application relates to the field of security monitoring technologies, and in particular, to a wakeup method and an apparatus.

### BACKGROUND

A human figure recognition technology is a technology in which a feature of human body imaging is used, and a graphic image is processed, to finally find, recognize, and locate a human figure target in imaging space. The human figure recognition technology is an important technology of a smart security system, and can be widely applied to fields such as intelligent monitoring, intelligent transportation, target tracking, and target following, for example, smart door locks and monitoring devices.

The smart door locks are used as an example. Existing smart door locks perform human figure recognition mainly by using low-power consumption devices such as an image sensor, an infrared sensor, a pyroelectric infrared sensor (pyroelectric infrared sensor, PIR), and two levels of smart motion detection (smart motion detection, SMD). Level-1 low-frame-rate SMD and the PIR are jointly used as a level-1 wakeup interrupt source to detect target motion or a thermal motion status in a region of interest (region of interest, ROI) in a scenario. When any one of the level-1 SMD or the PIR triggers an interrupt first, level-2 high-frame-rate SMD is triggered to further determine whether a human figure is really recognized in a monitoring image.

However, a current human figure recognition method can only enable the smart door locks to recognize a moving biological object, but cannot distinguish whether the moving biological object is a human or an animal. Consequently, recognition accuracy of the method is low, causing many false, missing, or delayed alarms. This greatly undermines user experience and reliability of a product warning function.

In conclusion, currently, a solution for improving human figure recognition accuracy in smart door locks urgently needs to be provided.

### SUMMARY

This application provides a wakeup method and an apparatus, to implement human figure recognition of a smart door lock and achieve high accuracy.

According to a first aspect, this application provides a wakeup method. The wakeup method may be applied to a detection device such as the foregoing smart door lock. The detection device is used as an example. In the method, the detection device obtains an image. For example, the detection device includes a camera, and the camera may capture the image. The detection device inputs the obtained image into a level-1 wakeup network to obtain a first detection result output by the level-1 wakeup network, where the level-1 wakeup network is used to perform target object detection on the input image. If the first detection result indicates that a target object such as a human figure exists in the image, a level-2 wakeup network is woken up. The level-2 wakeup network is also used to perform target object detection on the image, and detection precision of the level-2 wakeup network is higher than detection precision of the level-1 wakeup network. The image is further detected by using the level-2 wakeup network to obtain a second detection result output by the level-2 wakeup network. When the second detection result indicates that the target object exists in the image, the processing unit is woken up to perform a preset operation.

According to the foregoing design, the level-1 wakeup network and the level-2 wakeup network may perform target object recognition such as human figure recognition on a single frame of image. When the level-1 wakeup network detects that a human figure exists in the image, the level-2 wakeup network is woken up. When the level-2 wakeup network still detects that the human figure exists in the frame of image, the processing unit is woken up, to implement two-level wakeup of the single frame of image and reduce power consumption. Target object sensing precision of the level-2 wakeup network is higher than that of the level-1 wakeup network. Therefore, the level-2 wakeup network may filter a detection result of the level-1 wakeup network, so that frequencies of false wakeup and missed wakeup can be greatly reduced, and the target object sensing precision is improved. In addition, in this application, two-level wakeup of the single frame of image can be implemented without depending on time-domain information, so that a storage workload is reduced. In addition, quick response can be further implemented, and a frequency of delayed alarm is reduced or avoided.

In a possible design, the level-1 wakeup network includes a first subnet and a second subnet, the first subnet is used to perform feature extraction, and the second subnet is used to perform target object detection based on a feature extracted by the first subnet. When the detection device inputs the image into the level-1 wakeup network, the method includes: The detection device sequentially inputs a plurality of parts of the image into the first subnet to obtain a feature extracted by the first subnet from each part; determines a fused feature corresponding to the image based on the feature corresponding to each part; and uses the fused feature as input data of the second subnet to obtain the first detection result output by the second subnet.

According to the foregoing design, input data of the first subnet is a part of image in a frame of complete image. A feature of a part of image is separately extracted, and then feature fusion is performed, to determine a fused feature corresponding to one frame of image. The second subnet may determine, based on the fused feature, whether the target object exists in the image. In this method, processing such as ROI setting, cropping, or scaling does not need to be performed on the image, so that a wakeup procedure is simplified. In addition, because a resolution of input data of a single inference of the level-1 wakeup network is only 1/N of a resolution of an original image, and a running memory and an intermediate-layer data cache of the level-1 wakeup network are also only 1/N of the resolution of the original image, an input cache and a calculation amount of the second subnet are reduced while ensuring the target object sensing precision. This resolves a problem in the conventional technology that full-frame data needs to be buffered, and greatly reduces a data buffering requirement.

In a possible design, a detection apparatus includes a memory. Each part of the image is one or more rows of data, read from target memory space, in the image. Different parts include different data of the image. The target memory space may be all space of the memory, and a capacity of the target memory space is less than a data amount of the image.

According to the foregoing design, the problem in the conventional technology that the full-frame data needs to be buffered is resolved, and the data buffering requirement is greatly reduced, so that the method may be applied to detection apparatuses with different memory capacities, and practicability of the method is enhanced.

In a possible design, that the detection apparatus detects the image by using the level-2 wakeup network includes: The detection apparatus inputs the fused feature corresponding to the image into the level-2 wakeup network to obtain the second detection result output by the level-2 wakeup network.

According to the foregoing design, the level-2 wakeup network may perform target object detection on the image based on the fused feature, so that the first subnet is reused in the level-1 wakeup network and the level-2 wakeup network. This further reduces power consumption.

In a possible design, that the detection apparatus detects the image by using the level-2 wakeup network includes: The detection apparatus inputs the image into the level-2 wakeup network to obtain the second detection result output by the level-2 wakeup network.

In a possible design, power consumption of the level-1 wakeup network is less than a first specified value, power consumption of the level-2 wakeup network is less than a second specified value, and the first specified value is not greater than the second specified value.

According to the foregoing design, a low-power consumption wakeup network is used to implement target object recognition. This meets a low-power consumption requirement of the detection apparatus.

According to a second aspect, this application provides a detection apparatus. The detection apparatus is configured to perform the method in the first aspect or any design of the first aspect. For beneficial effect, refer to related descriptions of the first aspect. Details are not described herein again. The detection apparatus includes a camera, a first processor, and a second processor. The camera is configured to capture an image. The first processor is configured to obtain the image captured by the camera and input the image into a level-1 wakeup network to obtain a first detection result output by the level-1 wakeup network. In this case, the first processor is configured to run the level-1 wakeup network. The level-1 wakeup network is used to perform target object detection on the image. When the first detection result indicates that a target object exists in the image, a level-2 wakeup network is woken up. In this case, the first processor is configured to run the level-2 wakeup network and interrupt the level-1 wakeup network, and the first processor detects the image by using the level-2 wakeup network to obtain a second detection result output by the level-2 wakeup network. The level-2 wakeup network is used to perform target object detection on the input image, and detection precision of the level-2 wakeup network is higher than detection precision of the level-1 wakeup network. When the second detection result indicates that the target object exists in the image, the first processor wakes up the second processor. The second processor is configured to perform a preset operation after being woken up.

In a possible design, the level-1 wakeup network includes a first subnet and a second subnet, the first subnet is used to perform feature extraction, and the second subnet is used to perform target object detection based on a feature extracted by the first subnet. When using the image as input data of the level-1 wakeup network to obtain the first detection result output by the level-1 wakeup network, the first processor is specifically configured to: sequentially input a plurality of parts of the image into the first subnet to obtain a feature extracted by the first subnet from each part; determine a fused feature corresponding to the image based on the feature of each of the plurality of parts; and use the fused feature as input data of the second subnet to obtain the first detection result output by the second subnet.

In a possible design, the apparatus further includes a memory. Each part of the image is one or more rows of data, read from target memory space, in the image. Different parts include different data of the image. The target memory space may be all space of the memory, and a capacity of the target memory space is less than a data amount of the image.

In a possible design, when detecting the image by using the level-2 wakeup network, the second processor is specifically configured to input the fused feature corresponding to the image into the level-2 wakeup network to obtain the second detection result output by the level-2 wakeup network.

In a possible design, when detecting the image by using the level-2 wakeup network, the second processor is specifically configured to input the image into the level-2 wakeup network to obtain the second detection result output by the level-2 wakeup network.

In a possible design, power consumption of the level-1 wakeup network is less than a first specified value, power consumption of the level-2 wakeup network is less than a second specified value, and the first specified value is not greater than the second specified value.

According to a third aspect, this application provides a detection apparatus. For beneficial effect, refer to descriptions in the first aspect. Details are not described herein again. The apparatus has a function of implementing behavior in the method example in the first aspect. The function may be implemented by hardware, or may be implemented by hardware executing corresponding software. The hardware or the software includes one or more units corresponding to the foregoing function. In a possible design, a structure of the apparatus includes an obtaining unit, a detection unit, and a processing unit. These units may perform corresponding functions in the method example in the first aspect. For details, refer to the detailed descriptions in the method example. Details are not described herein again.

According to a fourth aspect, an embodiment of this application provides a computer-readable storage medium. The computer-readable storage medium stores a computer program or instructions. When the computer program or the instructions are executed by a detection apparatus, the detection apparatus is enabled to perform the method in the first aspect or any design of the first aspect.

According to a fifth aspect, an embodiment of this application provides a computer program product. The computer program product includes a computer program or instructions. When the computer program or the instructions are executed by a detection apparatus, the method in the first aspect or any design of the first aspect is implemented.

In this application, based on implementations provided in the foregoing aspects, the implementations may be further combined to provide more implementations.

### BRIEF DESCRIPTION OF DRAWINGS

FIG. 1 is a diagram of a possible system architecture according to an embodiment of this application;
FIG. 2 is a diagram of a scenario in the conventional technology;
FIG. 3 is a diagram of a possible system architecture according to an embodiment of this application;
FIG. 4 is a schematic flowchart of a wakeup method according to an embodiment of this application;
FIG. 5 is a diagram of another possible system architecture according to an embodiment of this application;
FIG. 6 is a diagram of a structure of a detection device according to an embodiment of this application; and
FIG. 7A and FIG. 7B are a schematic flowchart of another wakeup method according to an embodiment of this application.

### DESCRIPTION OF EMBODIMENTS

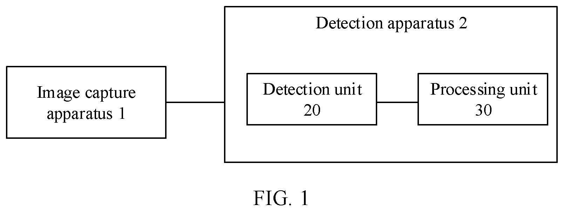

FIG. 1 is a diagram of an architecture of a monitoring system according to an embodiment of this application. The system includes an image capture apparatus 1 and a detection apparatus 2. The detection apparatus 2 may include a detection unit 20 and a processing unit 30. The image capture apparatus 1 and the detection apparatus 2 may communicate with each other in a wired (for example, a bus) or wireless (for example, a network) manner. In an implementation, the image capture apparatus 1 is integrated into the detection apparatus 2. In this case, the image capture apparatus 1 and the detection apparatus 2 may be connected through the bus. Alternatively, the image capture apparatus 1 and the detection apparatus 2 are respectively located in two independent devices. In this case, the image capture apparatus 1 and the detection apparatus 2 may communicate with each other through a network.

The image capture apparatus 1 may be a camera, configured to capture an image of a photographed object. The image capture apparatus 1 may capture an image after receiving a photographing instruction, or the image capture apparatus 1 may periodically capture an image. For example, in the security monitoring field, the camera usually captures one frame of image per unit time (for example, 1s or 1 ms, which is not specifically limited).

The detection unit 20 may be configured to perform target object detection (including target object recognition) on the image. If the target object is a human figure, the detection unit 20 may be configured to recognize whether a human figure exists in the image. For another example, if the target object is a vehicle, the detection unit 20 may be configured to recognize whether a vehicle exists in the image, and the like. The detection unit 20 may be software, hardware, or a combination of hardware and software.

The processing unit 30 may be configured to perform data processing and calculation. For example, in this application, the processing unit 30 may be configured to perform face detection, alarm notification, log recording, and the like. This is not specifically limited. The processing unit 30 may be a component with computing power, such as a central processing unit (center processing unit, CPU) or a microcontroller unit (mircocontroller unit, MCU). The processing unit 30 has a plurality of power consumption modes, for example, a sleep mode and a working mode. When the processing unit 30 is in the sleep mode, the processing unit 30 only needs to perform a few operations or maintain some basic functions, to achieve a low-power consumption state. When the processing unit 30 is in the working mode, the processing unit 30 needs to perform more processing operations, to achieve a high-power consumption state. In this application, to reduce power consumption of the system, the processing unit 30 may be in the sleep mode by default. When a specific processing operation needs to be performed, the detection unit 20 wakes up the processing unit 30.

It should be noted that the system architecture shown in FIG. 1 is merely an example. In actual application, the system to which this application is applicable may have more or fewer units than those in FIG. 1. For example, the system may further include an audio unit such as a speaker or a microphone, and may further include a display unit such as a display.

The system provided in this embodiment of this application may be applied to a plurality of visual sensing fields such as security monitoring, doorbell and access control, autonomous driving, and home robots. For example, in the security monitoring field, the system may be a monitoring device, for example, a network camera (IP camera, IPC). The IPC may be installed indoors (or outdoors, which is not limited). The image capture apparatus 1 in the IPC is configured to photograph an image of an indoor region, and the detection apparatus 2 uses the image captured by the image capture apparatus 1 as input data of the detection unit 20. When the detection unit 20 detects that a human figure exists in the image, the detection unit 20 wakes up the processing unit 30. The processing unit 30 may be configured to: perform face detection on the image, and may send an alarm notification to a householder when detecting that a face in the image belongs to a stranger, and the like. It should be understood that operations performed by the processing unit 30 described herein and below are merely examples. This is not limited in this application.

For another example, in the doorbell and access control field, the system may be a smart door lock, and is usually installed on an entrance door. The image capture apparatus 1 in the smart door lock is configured to capture an image in a region near the entrance door. Similarly, the detection apparatus 2 uses the image captured by the image capture apparatus 1 as input data of the detection unit 20. When the detection unit 20 detects that a human figure exists in the image, the processing unit 30 is woken up, and the processing unit 30 sends an alarm notification to a householder when detecting that a stranger exists in the image.

For still another example, in the field of autonomous driving, the system may be a vehicle-mounted apparatus, for example, an event data recorder. The image capture apparatus 1 in the event data recorder is configured to capture an image in a region near a vehicle. Similarly, the detection apparatus 2 uses the image captured by the image capture apparatus 1 as input data of the detection unit 20. When the detection unit 20 detects that a human figure exists in the image, the processing unit 30 is woken up, and the processing unit 30 may record an image of a stranger in a form of a log, send a notification to a vehicle owner, or the like when detecting that a stranger exists in the image.

It should be understood that the fields and scenarios listed above are merely examples for description, and application fields and scenarios of the system are not limited in this application. For ease of understanding, the following uses an example in which the system is a smart door lock for description.

A person skilled in the art may know that a device such as a smart door lock is a low-power consumption device, and a power consumption level is usually in a milliwatt range or even a microwatt range. To implement this requirement, an internal working manner of the smart door lock complies with low-power consumption multi-level wakeup. Specifically, the detection unit 20 in the smart door lock is designed to use a plurality of levels of low-power consumption devices (such as a pyroelectric infrared sensor (pyroelectric infrared sensor, PIR) and smart motion detection (smart motion detection, SMD)), and use a manner of waking up the plurality of levels of low-power consumption devices progressively (which may also be referred to as multi-level low-power consumption wakeup) to save power, to implement a low-power consumption requirement of the smart door lock.

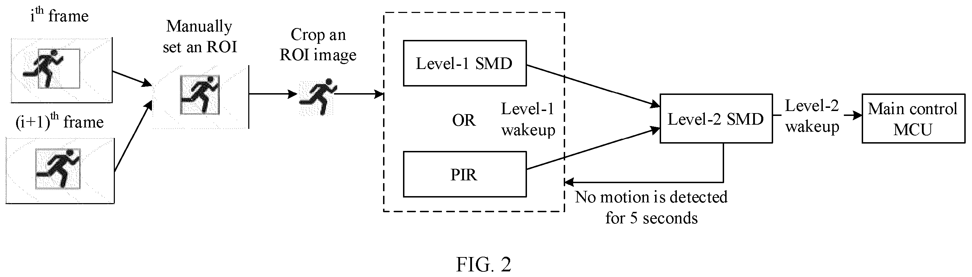

For example, FIG. 2 shows an internal architecture of an existing smart door lock. With reference to FIG. 1 and FIG. 2, it is understood that the detection unit 20 in the smart door lock includes level-1 SMD, a PIR, and level-2 SMD, and a processing procedure of the detection unit 20 mainly includes the following.

The image capture apparatus 1 captures an image in real time. The image captured by the image capture apparatus 1 is a panoramic image, and a regular or irregular region of interest (region of interest, ROI) is set in the panoramic image. The ROI is usually set manually based on a range that needs to be detected. For example, the ROI is a region that is in the image photographed by the image capture apparatus 1 and in which there is a high probability that a human figure exists, such as an entrance or a corridor.

Subsequently, an image corresponding to an ROI (ROI image for short) in a complete image captured by the image capture apparatus 1 is properly scaled and then input into the level-1 SMD. The level-1 SMD may be used to perform moving object detection on two input adjacent frames of images (ROI images in the two frames of images herein). Specifically, when it is detected that there is a pixel difference between the two frames of images, it is considered that object motion exists. For example, when a human, an animal, or an inanimate object enters a photographing region of the smart door lock, the level-1 SMD detects the object motion. In this case, the level-1 SMD wakes up the level-2 SMD.

In addition, when detecting a thermal motion status, the PIR that is in a parallel detection position with the level-1 SMD also wakes up the level-2 SMD. In other words, either the level-1 SMD or the PIR may wake up the level-2 SMD. When the level-2 SMD is woken up, the level-1 SMD is interrupted, and an image subsequently captured by the image capture apparatus 1 is input into the level-2 SMD for further human figure recognition.

Similarly, after the level-2 SMD is woken up, ROI images in two new frames of images subsequently captured by the image capture apparatus 1 are input into the level-2 SMD. For example, after the level-1 SMD wakes up the level-2 SMD based on an i^{th} frame of ROI image and an (i+1)^{th} frame of ROI image, the level-2 SMD may perform motion detection on the (i+1)^{th} frame of ROI image and an (i+2)^{th} frame of ROI image, or on an (i+3)^{th} frame of ROI image and an (i+4)^{th} frame of ROI image. If the level-2 SMD still detects a moving object, the level-2 SMD wakes up the processing unit 30 (that is, an MCU in FIG. 2). In this way, multi-level low-power consumption wakeup is implemented.

The level-2 SMD can filter the level-1 SMD, that is, remove a large quantity of frequencies of useless false wakeup, so that power consumption can be reduced. However, although the smart door lock shown in FIG. 2 can meet a low-power consumption requirement, because the SMD cannot distinguish between human motion and non-human motion (for example, curtain motion or a pixel change caused by a light change), and the PIR cannot recognize whether thermal motion is human motion or animal motion, a large quantity of times of false wakeup still exist in this technology. This increases extra system power consumption. In addition, the large quantity of times of false wakeup brings pressure on computing resources and storage to a subsequent detection process, and consequently, end-to-end computing efficiency is affected.

In addition, because the SMD needs to perform detection based on at least two frames of images, in a scene such as a scene in which a human figure is at a photographing boundary or a scene in which a human figure moves quickly, missed wakeup may be caused because the human figure quickly leaves the scene. For example, after the level-2 SMD is woken up, because the human figure has left, no human figure is captured in an ROI image input into the level-2 SMD, causing missed wakeup, or because the object moves slowly, the level-2 SMD may detect the moving object after a plurality of frames, causing delayed wakeup, and because the SMD cannot detect a static human figure, missed wakeup for a static human figure target is caused.

In conclusion, the existing smart door lock still has problems such as a large quantity of times of false wakeup, missed wakeup, and delayed wakeup, and detection precision is low.

In view of this, this application provides a new architecture of the detection unit 20 and a corresponding wakeup method. In this application, the detection unit 20 may include a plurality of levels of detection networks (also referred to as wakeup networks) that have a target object detection function, for example, a neural network model. Detection precision of each level of wakeup network increases progressively. When detecting that a target object exists in an image, a previous-level wakeup network wakes up a next-level wakeup network. When the target object is a human figure, the detection unit 20 may distinguish between a human figure (including a static human figure) and a non-human figure in the image based on a single frame of image, to reduce frequencies of false wakeup, missed wakeup, and delayed wakeup, reduce storage overheads, and improve detection precision.

The following uses an example in which the detection unit 20 is applied to the system architecture shown in FIG. 1 to describe a structure of the detection unit 20 provided in this embodiment of this application. For ease of description, the following uses an example in which the plurality of levels of wakeup networks in this application include a level-2 wakeup network for description.

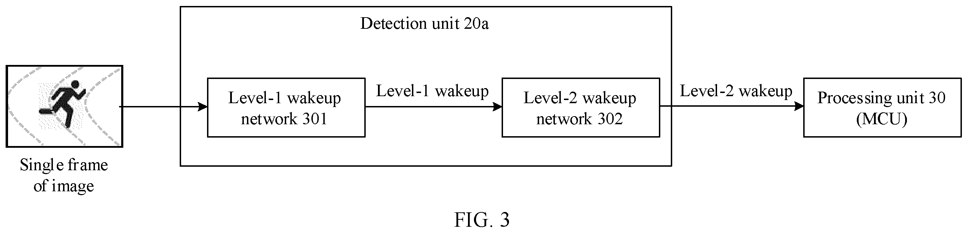

FIG. 3 is a diagram of a structure of the detection unit 20 according to an embodiment of this application. As shown in FIG. 3, the detection unit 20a includes a level-1 wakeup network 301 and a level-2 wakeup network 302. The level-1 wakeup network may be used to perform target object detection on an image. The target object may be a human figure, an animal, or an inanimate object like a vehicle or an obstacle. This is not specifically limited. In an application scenario of this embodiment of this application, a human figure is usually detected. The following uses an example in which the target object is the human figure for description, and the human figure in the following may be replaced with the target object.

The level-1 wakeup network 301 may be used to perform human figure recognition on an image captured by the image capture apparatus 1. Specifically, the level-1 wakeup network 301 may extract an image feature of an input image, perform human figure recognition based on the image feature to determine whether the human figure exists in the input image, and wake up the level-2 wakeup network 302 when recognizing that the human figure exists in the image. The level-2 wakeup network 302 may also be used to perform human figure recognition on the image, and wake up the processing unit 30 when recognizing that the human figure exists in the image.

Both the level-1 wakeup network 301 and the level-2 wakeup network 302 may use a neural network model. The level-1 wakeup network 301 is used as an example. The level-1 wakeup network 301 may be a classification model, and the classification model includes a binary classification model and a multiclass classification model. The binary classification model may be used to recognize whether a human figure exists in an image. When a plurality of target objects (such as a human and a vehicle) are set, the level-1 wakeup network 301 may use the multiclass classification model, and may be used to recognize whether a human and/or a vehicle exists in the image. Alternatively, the level-1 wakeup network 301 may be a human figure detection model, and may be further used to detect a position of a human figure in an image, or the like.

In this application, to reduce system power consumption, a neural network model applied to this application may be of a simple structure, that is, the neural network model has a small quantity of layers, and/or the neural network model uses a more simplified data processing algorithm. For example, the neural network model may convert a floating-point operation into a low-bit (bit) operation, to reduce complexity of data processing and achieve low power consumption and high accuracy. In addition, because an additional operation like "positioning" is added to the human figure detection model based on human figure recognition, in actual application, to further reduce power consumption, both the level-1 wakeup network 301 and the level-2 wakeup network 302 may use a classification model having a human figure recognition function.

It should be noted that, although functions of the two wakeup networks are similar, processing precision of the level-2 wakeup network 302 is higher than processing precision of the level-1 wakeup network 301. For example, the level-2 wakeup network 302 has a larger capacity. Specifically, the level-2 wakeup network 302 includes more layers, uses more training data, has higher data processing precision, and has a higher processing frame rate than the level-1 wakeup network 301. For example, in terms of data processing precision, the level-2 wakeup network 302 may convert a floating-point operation into an 8-bit operation, but the level-1 wakeup network 301 may convert a floating-point operation into a 4-bit operation. In terms of a frame rate, the level-1 wakeup network 301 may determine, based on a low frame rate (for example, a recognition result of one frame of image), whether to wake up the level-2 wakeup network 302, but the level-2 wakeup network 302 may determine, based on a high frame rate (for example, a recognition result of a plurality of frames of images), whether to wake up the processing unit 30, so that the level-2 wakeup network 302 has higher detection precision.

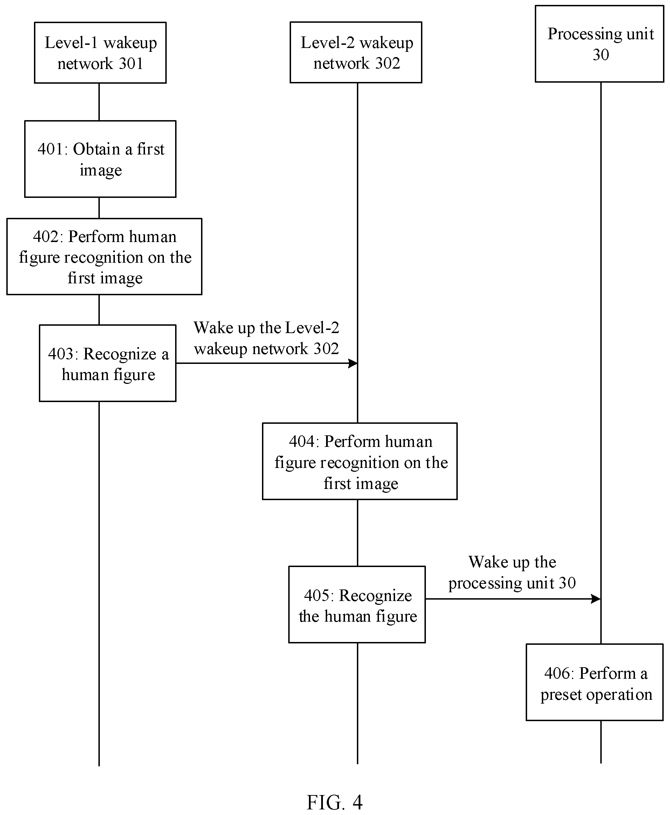

The following describes, based on the structure shown in FIG. 3, a wakeup method provided in an embodiment of this application. FIG. 4 is a schematic flowchart of the method. As shown in FIG. 4, the method includes the following steps.

Step 401: The level-1 wakeup network 301 obtains an image (denoted as a first image) captured by the image capture apparatus 1.

The image capture apparatus 1 inputs the captured image into the detection apparatus 2. Correspondingly, the detection apparatus 2 receives the image sent by the image capture apparatus 1. It should be noted that the image capture apparatus 1 may periodically capture an image, for example, capture one frame of image per second, and sequentially send the captured image to the detection apparatus 2. Correspondingly, the detection apparatus 2 sequentially receives the image sent by the image capture apparatus 1.

Step 402: The level-1 wakeup network 301 uses the first image as input data, and performs human figure recognition on the first image.

Step 403: The level-1 wakeup network 301 wakes up the level-2 wakeup network 302 when recognizing that a human figure exists in the first image.

After the level-1 wakeup network 301 wakes up the level-2 wakeup network 302, the level-1 wakeup network 301 is interrupted, and the image input by the image capture apparatus 1 is input into the level-2 wakeup network 302 for processing.

Step 404: The level-2 wakeup network 302 performs human figure recognition on the first image.

The level-2 wakeup network 302 obtains the first image, and uses the first image as input data, to perform human figure recognition on the first image. Optionally, the input data of the level-2 wakeup network 302 may alternatively be an image feature, determined by the level-1 wakeup network 301, of the first image. It should be understood that when the input data is different, the used level-2 wakeup network 302 may be different.

In another implementation, after being woken up, the level-2 wakeup network 302 may further detect one frame of image (for example, a second image) after the first image, and determine, based on a detection result of the second image, whether to wake up the processing unit 30. Alternatively, the level-2 wakeup network 302 may determine, based on a detection result of a plurality of frames of images, whether to wake up the processing unit 30. For example, the level-2 wakeup network 302 performs determining based on the detection result of the first image and the detection result of the second image, or based on the detection result of the second image and a detection result of a third image. If a plurality of detection results all indicate that the human figure exists, the level-2 wakeup network 302 wakes up the processing unit 30.

Step 405: When the level-2 wakeup network 302 wakes up the processing unit 30 when recognizing whether the human figure exists in the first image.

Step 406: The processing unit 30 performs a preset operation. Refer to the foregoing descriptions. Details are not described herein again.

According to the foregoing design, in this embodiment of this application, two-level wakeup may be performed based on a single frame of image. Both the level-1 wakeup network and the level-2 wakeup network use a low-power consumption neural network model to replace the SMD/PIR. This can resolve a business pain point of an existing extremely low-power consumption sensor device market, and is expected to implement feature extraction and a mode recognition system architecture in a milliwatt range or even a microwatt range. Compared with a visual sensor chip in the conventional technology, this method greatly reduces power consumption, and have features such as a highly dedicated device, a small area, and ultra-low power consumption. Target object sensing precision of the level-2 wakeup network is higher than that of the level-1 wakeup network. Therefore, the level-2 wakeup network may filter a recognition result of the level-1 wakeup network, so that frequencies of false wakeup and missed wakeup can be greatly reduced, and the target object sensing precision is improved. In addition, in this application, two-level wakeup can be implemented based on the single frame of image without depending on time-domain information, so that quick response can be implemented, and a frequency of delayed alarm is reduced or avoided.

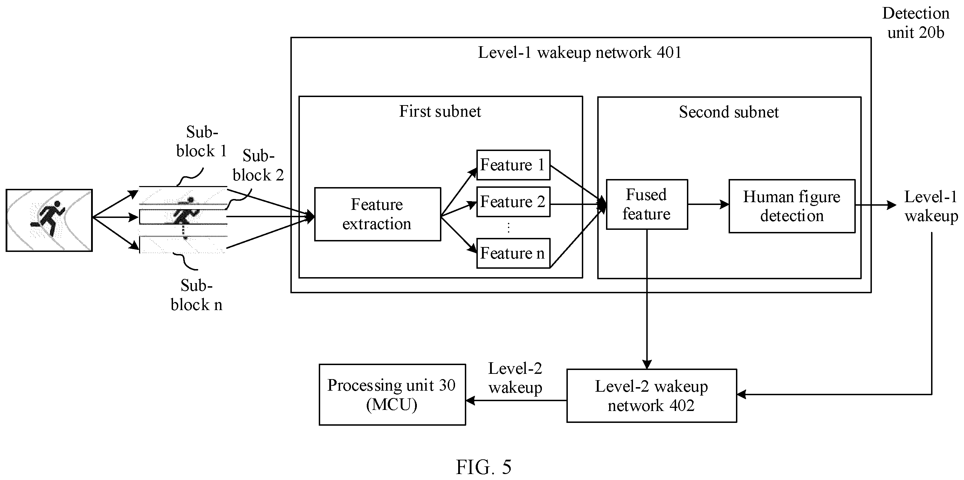

FIG. 5 is a diagram of a structure of another detection unit 20b according to an embodiment of this application. The detection unit 20b includes a level-1 wakeup network 401 and a level-2 wakeup network 402. For functions of the level-1 wakeup network 401 and the level-2 wakeup network 402, respectively refer to descriptions of the level-1 wakeup network 301 and the level-2 wakeup network 302. The following describes only differences.

In an optional implementation, as shown in FIG. 5, the level-1 wakeup network 401 includes a plurality of modules, for example, a first subnet and a second subnet in FIG. 3 (shown as two modules in FIG. 3, but this application is not limited thereto). It may also be understood that the level-1 wakeup network 401 is divided into two parts, so that the first subnet and the second subnet are obtained. Each module may include one or more layers of the level-1 wakeup network 401.

The first subnet is used to perform feature extraction on an input image, to extract an image feature corresponding to the input image. Input data of a first part may be a part of image in one frame of complete image (for example, an image captured by the image capture apparatus 1). For example, one frame of complete image is divided into a plurality of blocks that do not overlap each other by using a fixed size as a granularity. In other words, the blocks have a same size. Each block is sequentially input into the first subnet, and the first subnet sequentially extracts an image feature of each block. The manner of the first subnet may also be applied to a system with a small memory capacity, and processing such as ROI setting, cropping, or scaling does not need to be performed on an image, so that a wakeup procedure is simplified.

The second subnet may be used to fuse image features of the plurality of blocks to obtain an image feature corresponding to one frame of complete image. The fusion herein may refer to splicing the image features of the plurality of blocks in a sequence of the blocks. For example, a convolution operation of the second subnet may further include performing a convolution operation and a pooling operation at a splicing position of an image feature of each block after fusion, and perform stitching on a "gap" of the image feature of each block to restore a spatial correlation. This helps improve target sensing precision. Optionally, the image features of the plurality of blocks may alternatively be fused by the first subnet (not shown in FIG. 5). This is not specifically limited. The second subnet performs human figure recognition based on an input image feature, and wakes up the level-2 wakeup network 302 when recognizing that the human figure exists in the image.

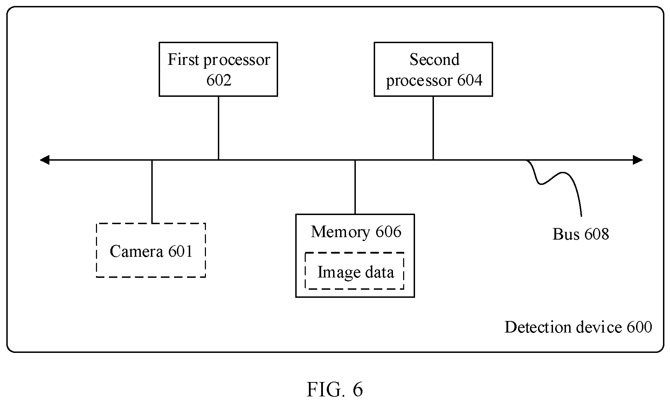

FIG. 6 is a diagram of a structure of another detection device according to an embodiment of this application. As shown in FIG. 6, a detection device 600 includes a first processor 602, a second processor 604, a memory 606, and a bus 608. Optionally, the detection device 600 may further include a camera 601. The camera 601, the first processor 602, the second processor 604, the memory 606, and the bus 608 communicate with each other through the bus 608. The detection device 600 may be the system shown in FIG. 1, FIG. 3, or FIG. 5. It should be understood that quantities of processors and memories in the detection device 600 are not limited in this application.

The bus 608 may be a peripheral component interconnect (peripheral component interconnect, PCI) bus, an extended industry standard architecture (extended industry standard architecture, EISA) bus, and or the like. Buses may be classified into an address bus, a data bus, a control bus, and the like. For ease of representation, the bus is represented by using only one line in FIG. 6. However, it does not mean that there is only one bus or only one type of bus. The bus 608 may include a path for transmitting information between components (for example, the first processor 602, the second processor 604, and the memory 606) of the detection device 600.

The first processor 602 may include any one or more of processors such as a graphics processing unit (graphics processing unit, GPU), a network processor (neural-network processing unit, NPU), and an FPGA. In this application, the first processor 602 may be configured to run the level-1 wakeup network 301 and the level-2 wakeup network 302 in FIG. 3, or configured to run the level-1 wakeup network 401 and the level-2 wakeup network 402 in FIG. 5.

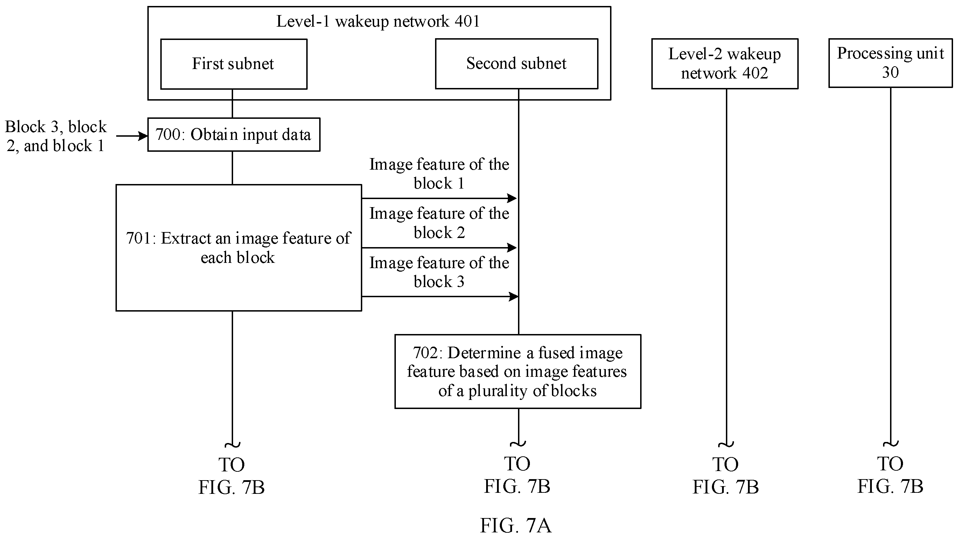

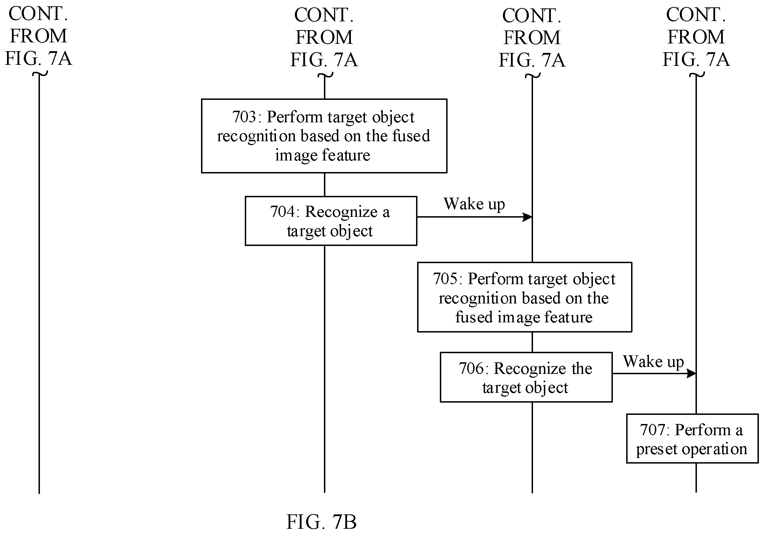

The second processor 604 may include any one or more of processors such as a central processing unit (central processing unit, CPU), a microcontroller unit (mircocontroller unit, MCU), a GPU, a microprocessor (microprocessor, MP), or a digital signal processor (digital signal processor, DSP). In this application, the second processor 604 may have a function of the processing unit 30 in FIG. 3 or FIG. 5, and is configured to perform steps performed by the processing unit 30 in the embodiment shown in FIG. 4, or is configured to perform steps performed by the processing unit 30 in the following embodiment shown in FIG. 7A and FIG. 7B. Details are not described herein again.

The memory 606 may be a memory that directly exchanges data with the first processor 602, and the memory 606 includes a volatile memory (volatile memory), for example, a random access memory (random access memory, RAM). The memory 606 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 606 may include a program storage region and a data storage region. The program storage region stores executable program code. The first processor 602 executes the executable program code to separately implement functions of the level-1 wakeup network 301 and the level-2 wakeup network 302 in FIG. 3, or implement functions of the level-1 wakeup network 401 and the level-2 wakeup network 402 in FIG. 5, to implement the wakeup method. That is, the memory 606 stores an instruction used by the detection device 600 to perform the wakeup method provided in this application. Data is stored in the data storage region, for example, image data obtained from the camera 601. Optionally, the memory 606 may further store program code that can be executed by the second processor 604, or the detection device 600 further includes a memory dedicated to exchanging data with the second processor 604, which is not shown in FIG. 6.

It should be noted that an architecture of a system shown in FIG. 6 is merely an example. In actual application, the system to which this application is applicable may have more or fewer units than those in FIG. 6. For example, the detection device 600 may not have the camera 601. For another example, the detection device 600 may further include a communication interface, and use a transceiver module such as but not limited to a network interface card or a transceiver to implement communication between the detection device 600 and another device or a communication network. For example, when the detection device 600 does not have the camera 601, the detection device 600 may communicate with the camera 601 through the communication interface to obtain the image data captured by the camera 601.

The following describes another wakeup method provided in an embodiment of this application by using an example in which the system shown in FIG. 5 is applied. FIG. 7A and FIG. 7B are a schematic flowchart of the wakeup method. As shown in FIG. 7A and FIG. 7B, the method includes the following steps.

Step 700: Obtain input data.

Obtaining input data includes: obtaining a plurality of blocks included in one frame of image captured by a camera, and sequentially inputting each block into the first subnet.

Step 701: The first subnet determines an image feature of each block.

With reference to FIG. 6, it is understood that in an implementation, the first processor divides an original image captured by the camera 601 into a plurality of blocks, and sequentially inputs each block into the first subnet. The first subnet extracts the image feature of each block.

In this example, a complete procedure of step 701 may include: The camera 601 captures an image, and transmits captured one frame of image to the memory 606 in a row scanning manner. It should be understood that one frame of image includes a plurality of rows, and each time the image is scanned, one row of data in the image can be obtained. That is, the memory 606 stores image data at a granularity of "row". When an "available space" of the memory 606 is full, a plurality of rows of data stored in the available space form a "block". The first processor 602 obtains the plurality of rows of data stored in the available space, that is, obtains one block in the image, uses the block as input data of the first subnet, and extracts an image feature of the block by using the first subnet. The "available space" in the memory 606 may be a part of storage space in the memory 606, and a capacity of the available space may be a preset value. Optionally, the preset value may be further dynamically adjusted.

Specifically, in this application, a "ping-pong buffer (buffer)" mechanism may be used to alternately write and read image data of two adjacent blocks. For example, the memory 606 includes two "available spaces" that are respectively denoted as first buffer and second buffer. With reference to FIG. 5, it is understood that the first buffer is configured to temporarily buffer H rows of data of a block 1. After all the H rows of data of the block 1 are written, the first processor 602 reads the H rows of data of the block 1 from the first buffer to perform one time of feature extraction (that is, the H rows of data are input into the first subnet, and an image feature of the block 1 is extracted by using the first subnet). In this case, the second buffer continues to receive H rows of data of a block 2 online. After all the H rows of data of the block 2 are written, the first processor 602 reads the H rows of data of the block 2 from the second buffer to perform one time of feature extraction. By analogy, the first buffer and the second buffer complete a feature extraction process of the N blocks one by one in a dynamic pipeline manner. Both H and N are positive integers.

Step 702: The second subnet determines a fused image feature based on image features of the plurality of blocks.

Step 703: The second subnet performs target object recognition (for example, human figure recognition) based on the fused image feature.

Step 704: The second subnet wakes up the level-2 wakeup network 402 when detecting that a target object (for example, a human figure) exists in the image.

An example in which the target object is the human figure is used. In an implementation, the level-1 wakeup network 401 triggers an interrupt instruction when recognizing the human figure, interrupts the level-1 wakeup network 401, and wakes up the level-2 wakeup network 402. Correspondingly, the first processor runs the level-2 wakeup network 402.

Step 705: The level-2 wakeup network 402 uses the fused image feature as input data, and performs target object recognition (for example, human figure recognition) based on the input data.

In the example in FIG. 5, the input data of the level-2 wakeup network 402 may be the fused image feature. In this way, the first subnet can be reused in two levels of wakeup networks, to further reduce system power consumption.

Optionally, the input data of the level-2 wakeup network 402 may alternatively be the original image captured by the camera 601. In this solution, additional buffer used to buffer the original image is needed, that is, this solution is applied to a device with the memory 606 having a large capacity. It should be understood that when the input data is different, the used level-2 wakeup network 402 may be different.

Step 706: The level-2 wakeup network 302 wakes up the processing unit 30 when recognizing whether the target object (for example, the human figure) exists in the image.

Step 707: The processing unit 30 performs a preset operation. Refer to the foregoing descriptions. Details are not described herein again.

The foregoing design may be applied to a device with a small memory capacity. A person skilled in the art may know that a memory capacity in a device such as an intelligent lock is usually small. In the conventional technology, an image captured by a camera is usually scaled or cropped and then input into the detection unit 20 for processing. In this application, processing such as ROI setting, cropping, or scaling does not need to be performed on the image, so that a wakeup procedure is simplified. In addition, because a resolution of input data of a single inference of the level-1 wakeup network 401 is only 1/N of a resolution of the original image, and a running memory and an intermediate-layer data cache of the level-1 wakeup network 401 are also only 1/N of the resolution of the original image, an input cache and a calculation amount of the second subnet are reduced while target object sensing precision is ensured. This resolves a problem in the conventional technology that full-frame data needs to be buffered, and greatly reduces a data buffering requirement.

All or some of the foregoing embodiments may be implemented by using software, hardware, firmware, or any combination thereof. When software is used to implement embodiments, all or a part of the embodiments may be implemented in a form of a computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

The various illustrative logical units and circuits described in embodiments of this application may implement or operate the described functions by using a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM memory, a flash memory, a ROM memory, an EPROM memory, an EEPROM memory, a register, a hard disk, a removable magnetic disk, a CD-ROM, or a storage medium of any other form in the art. For example, the storage medium may be connected to a processor, so that the processor may read information from the storage medium and write information to the storage medium. Optionally, the storage medium may be integrated into a processor. The processor and the storage medium may be disposed in an ASIC.

These computer program instructions may also be loaded onto a computer or another programmable data processing device, so that a series of operations and steps are performed on the computer or another programmable device, to generate computer-implemented processing. Therefore, the instructions executed on the computer or the another programmable device provide steps for implementing a specific function in one or more processes in the flowcharts and/or in one or more blocks in the block diagrams.

Although this application is described with reference to specific features and embodiments thereof, it is clear that various modifications and combinations may be made to them without departing from the spirit and scope of this application. Correspondingly, this specification and accompanying drawings are merely example description of this application defined by the accompanying claims, and are considered as any of or all modifications, variations, combinations or equivalents that cover the scope of this application. It is clear that a person skilled in the art can make various modifications and variations to this application without departing from the scope of this application. In this way, this application is intended to cover these modifications and variations of this application provided that they fall within the scope defined by the claims of this application and their equivalent technologies.

## Claims

1. A wakeup method, comprising:
obtaining an image;
using the image as input data of a level-1 wakeup network to obtain a first detection result output by the level-1 wakeup network, wherein the level-1 wakeup network is used to perform target object detection on the input image;
waking up the level-2 wakeup network when the first detection result indicates that a target object exists in the image, wherein the level-2 wakeup network is used to perform target object detection on the image, and detection precision of the level-2 wakeup network is higher than detection precision of the level-1 wakeup network;
detecting the image by using the level-2 wakeup network to obtain a second detection result output by the level-2 wakeup network; and
when the second detection result indicates that the target object exists in the image, waking up a processing unit to perform a preset operation.

2. The method according to claim 1, wherein the level-1 wakeup network comprises a first subnet and a second subnet, the first subnet is used to perform feature extraction, and the second subnet is used to perform target object detection based on a feature extracted by the first subnet; and
the using the image as input data of a level-1 wakeup network to obtain a first detection result output by the level-1 wakeup network comprises:
sequentially inputting a plurality of parts of the image into the first subnet to obtain a feature extracted by the first subnet from each part; and
using a fused feature corresponding to the image as input data of the second subnet to obtain the first detection result output by the second subnet, wherein the fused feature is determined based on the feature of each of the plurality of parts.

3. The method according to claim 2, wherein each part of the image is one or more rows of data, read from target memory space, of the image, and different parts comprise different data of the image.

4. The method according to claim 2, wherein the detecting the image by using the level-2 wakeup network comprises:
using the fused feature as input data of the level-2 wakeup network to obtain the second detection result output by the level-2 wakeup network.

5. The method according to claim 1 or 2, wherein the detecting the image by using the level-2 wakeup network comprises:
using the image as input data of the level-2 wakeup network to obtain the second detection result output by the level-2 wakeup network.

6. A detection apparatus, comprising a camera, a first processor, and a second processor, wherein
the camera is configured to capture an image;
the first processor is configured to: obtain the image captured by the camera; use the image as input data of a level-1 wakeup network to obtain a first detection result output by the level-1 wakeup network, wherein the level-1 wakeup network is used to perform target object detection on the image; wake up the level-2 wakeup network when the first detection result indicates that a target object exists in the image; detect the image by using the level-2 wakeup network to obtain a second detection result output by the level-2 wakeup network, wherein the level-2 wakeup network is used to perform target object detection on the input image, and detection precision of the level-2 wakeup network is higher than detection precision of the level-1 wakeup network; and wake up the second processor when the second detection result indicates that the target object exists in the image; and
the second processor is configured to perform a corresponding preset operation after being woken up.

7. The apparatus according to claim 6, wherein the level-1 wakeup network comprises a first subnet and a second subnet, the first subnet is used to perform feature extraction, and the second subnet is used to perform target object detection based on a feature extracted by the first subnet; and
when using the image as the input data of the level-1 wakeup network to obtain the first detection result output by the level-1 wakeup network, the first processor is specifically configured to: sequentially input a plurality of parts of the image into the first subnet to obtain a feature extracted by the first subnet from each part; and use a fused feature corresponding to the image as input data of the second subnet to obtain the first detection result output by the second subnet, wherein the fused feature is fused based on the feature of each of the plurality of parts.

8. The apparatus according to claim 7, wherein the apparatus further comprises a memory; each part of the image is one or more rows of data, read from target memory space, of the image; and different parts comprise different data of the image.

9. The apparatus according to claim 7, wherein when detecting the image by using the level-2 wakeup network, the second processor is specifically configured to use the fused feature as input data of the level-2 wakeup network to obtain the second detection result output by the level-2 wakeup network.

10. The apparatus according to claim 6 or 7, wherein when detecting the image by using the level-2 wakeup network, the second processor is specifically configured to use the image as input data of the level-2 wakeup network to obtain the second detection result output by the level-2 wakeup network.

11. A computer-readable storage medium, wherein the computer-readable storage medium stores a computer program or instructions; and when the computer program or the instructions are executed by a detection apparatus, the detection apparatus is enabled to perform the method according to any one of claims 1 to 5.

12. A computer program product, wherein the computer program product comprises a computer program or instructions, and when the computer program or the instructions are executed by a detection apparatus, the method according to any one of claims 1 to 5 is implemented.
